# EUROPÄISCHE PATENTSCHRIFT

(11) **EP 0 972 910 B1**
(45) Veröffentlichungstag und Bekanntmachung des Hinweises auf die Patenterteilung: **11.06.2003**
(21) Anmeldenummer: 98810670.4
(22) Anmeldetag: 14.07.1998
(51) Int. Cl.: F01D 11/04, F16J 15/40

(54) **Berührungsloses Abdichten von Spalten in Gasturbinen**
Non-contact sealing of gaps in gas turbines
Système d'étanchéité sans contact pour turbines à gaz

(43) Veröffentlichungstag der Anmeldung: 19.01.2000
(73) Patentinhaber: ALSTOM (Switzerland) Ltd, 5401 Baden (CH)
(72) Erfinder: Beeck, Alexander, Dr., 79790 Küssaberg (DE); Endres, Wilhelm, Dr., 5453 Remetschwil (CH); Vogeler, Konrad, Dr., 79790 Küssaberg (DE); Weigand, Bernhard, Dr., 79787 Lauchringen (DE)

(56) Entgegenhaltungen:
- CH-A- 529 914
- DE-A- 1 930 411
- DE-A- 3 505 491
- DE-A- 19 619 722
- GB-A- 855 040
- US-A- 3 645 544
- US-A- 4 836 148

## Beschreibung

### Technisches Gebiet

Die vorliegende Erfindung betrifft eine Vorrichtung zum berührungslosen Abdichten von Spalten in Strömungsmaschinen, insbesondere in Gasturbinen.

### Stand der Technik

Der konstruktive Aufbau von Strömungsmaschinen bedingt eine Aneinanderreihung von zueinander feststehenden und/oder bewegten Bauteilen. Zwischen diesen Bauteilen verbleiben aus funktionalen Gründen oftmals ein oder mehrere Spalte, die im Strömungskanal der Strömungsmaschine von einem Primärfluidstrom überströmt werden. Hiermit verbunden ist ein Eindringen des Primärfluides in diese Spalte. Speziell im Heißgasteil einer Gasturbine ist ein Eindringen des heißen Primärfluides in Bauteilspalte aufgrund der hohen Temperaturen des Primärfluides, die häufig sogar über den maximal zulässigen Materialtemperaturen liegen, unbedingt zu vermeiden. Dennoch in die Spalte eindringendes, heißes Primärfluid kann als Folge des Wärmeaustauschs mit den an den Spalt angrenzenden Bauteilen somit zu unzulässig hohen Temperaturen dieser Bauteile führen. Dies wiederum stellt die Ursache für Bauteilschäden insbesondere in Form von Bauteilrissen oder einer zumindest deutlichen Verminderung der Lebensdauer dieser Bauteile dar. Darüber hinaus führen Spalte zu Strömungsleckagen der Primärfluidströmung und somit zu Einbußen im Wirkungsgrad von Gasturbinen.

Bisher wurden diese Spalte mit Hilfe mechanischer Dichtungen wie beispielsweise Dichtbleche und Dichtstreifen, Faltenbälge sowie federbelasteten Dichtungen oder auch mit Hilfe von Vorrichtungen zum fluiddynamischen Abdichten gegenüber dem Primärfluid abgedichtet.
Mechanische Dichtungen sind aufgrund ihres berührenden Wirkprinzips einem abrasiven Verschleiß ausgesetzt und weisen infolgedessen eine nur begrenzte Lebensdauer auf.
In den bisher bekannten Vorrichtungen zum fluiddynamischen Abdichten wird es angestrebt, den Spalt mittels einer einfachgerichteten Verdrängungsströmung zu sperren. Diese Verdrängungsströmung dichtet den Spalt gegenüber dem Primärfluid entweder mittels eines aus dem Spalt in die Primärfluidströmung ausgeblasenen, kontinuierlichen Sekundärfluidstroms, wie beispielsweise in CH 529 914 beschrieben, oder eines den Spalt überdeckenden Sekundärfluidfilms ab.

Im ersten Fall wird der Spalt an der der Primärströmung abgewandten Spaltöffnung mit einem Sekundärfluid erhöhten Gegendruckes beaufschlagt. Der höhere Druck des Sekundärfluides erwirkt eine einfach gerichtete Spaltströmung aus dem sekundärfluidseitigen Reservoir in die Primärströmung.
In dem zweiten bekannten Verfahren zum Zwecke fluiddynamischen Abdichtens eines Spaltes wird eine einfach gerichtete Sekundärfluidströmung mit einer Geschwindigkeitskomponente quer zur Spaltlängsrichtung in Form eines den Spalt überdeckenden Sekundärfluidfilms erzeugt. Infolge der Verdrängungswirkung des Sekundärfluides wird hierdurch eine fluidmechanische Trennung des Primärfluides gegenüber einem im Spalt befindlichen Tertiärfluid erzielt. Das Tertiärfluid entstammt hierbei einem Tertiärfluidreservoir und strömt über die der Primärströmung abgewandten Öffnung des Spaltes in den Spalt. Handelt es sich nicht um einen Spalt zwischen zwei Bauteilen sondern um eine Vertiefung in einem Bauteil, so weist diese Vertiefung eine geschlossene Bauteilkontur auf. Somit besteht, sofern keine zusätzliche Vorrichtung, wie beispielsweise ein Zuführkanal, angeordnet ist, keine Verbindung zu einem Reservoir des Tertiärfluides. Das als Totvolumen der Vertiefung auf der der Primärströmung abgewandten Seite der Wirbelströmung verbleibende Volumen der Vertiefung wird im folgenden vereinfachend ebenso als tertiärfluidseitiger Spaltanteil bezeichnet.

Beide Vorrichtungen zum fluiddynamischen Abdichten erfordern jedoch einen vergleichsweise hohen Massendurchsatz des zum Abdichten eingesetzten Sekundärfluides. Bei einer in der Praxis üblichen Verwendung von aus dem Verdichterbereich abgezweigtem Sekundärfluid weisen diese Verfahren zudem insbesondere im Turbineneintrittsbereich eine oftmals nur eingeschränkte Wirksamkeit auf. Als Ursache hierfür kann beispielsweise ein lokaler Aufstau der Strömung vor den Schaufeln des Eintrittsleitrades der Turbine zu einer lokalen Erhöhung des statischen Druckes der Primärfluidströmung führen. Bei einem in der Regel nur geringen Druckverlust der Primärströmung in der Brennkammer kann somit der lokale statische Druck der Primärströmung beim Überströmen eines Spaltes im Turbineneintrittsbereich höher sein als der Druck des unmittelbar vor der Brennkammer entnommenen und der Turbine zugeführten Sekundärfluides. Infolge dieses Druckgefälles kommt es zu einem lokalen Einströmen des heißen Primärfluides in zumindest Teilbereiche des Spaltes.

Thermisch oder mechanisch bedingte Bauteildehnungen und die sich hieraus ergebenden Änderungen der geometrischen Abmessungen der Spalte als auch Verschiebungen der Bauteile zueinander in Spaltlängsrichtung erhöhen die Anforderungen an die eingesetzten Dichtungen erheblich. Thermisch bedingte Änderungen der Bauteilgeometrie treten insbesondere im Heißgasteil einer Gasturbine auf. Als Folge resultieren häufige Fehlfunktionen sowohl mechanischer Dichtungen als auch der Vorrichtungen zum fluiddynamischen Abdichten. Die Lebensdauer der mechanischen Dichtungen wird zudem weiter deutlich reduziert.

In den Patentschriften GB 855 040 und US 3 645 544 werden Dichtvorrichtungen beschrieben, bei denen zur Abdichtung eines Spaltes gegen ein Primärfluid ein Sekundärfluid so in den Spalt zugeführt wird, daß sich in dem Spalt ein Wirbelsystem ausbildet. Die beschriebenen Dichtvorrichtungen sind aber jeweils nur für Spalte zwischen zwei Bauteilen einsetzbar, bei denen die Bauteile relativ zueinander rotieren und sich die Spalte jeweils über den gesamten Umfang erstrecken.

### Darstellung der Erfindung

Der Erfindung liegt also die Aufgabe zugrunde, eine Vorrichtung zum nichtverschleißenden und wirtschaftlichen Abdichten der in Strömungsmaschinen auftretenden Spalte zu entwickeln. Die Spalte können hierbei als Bauteilspalte zwischen zueinander ruhenden Bauteilen auftreten oder auch als spaltförmige Vertiefungen eines Bauteils ausgebildet sein. Die Vorrichtung ist insbesondere auch unter dem Gesichtspunkt eines zuverlässigen Einsatzes im Heißgasteil einer Gasturbine mit sich im Betrieb infolge thermischer und mechanischer Bauteildehnungen ändernden Spaltgeometrien zu entwickeln.

Diese, Aufgabe wird bei einer Vorrichtung gemäß Oberbegriff des Patentanspruches 1) erfindungsgemäß dadurch gelöst, daß in dem Spalt in Längsrichtung des Spaltes eine als Slalomkanal ausgebildete kammer angeordnet ist, in welcher das Sekundärfluid als Verdrängungsströmung geführt wird und eine Wirbelströmung ausbildet. Die Wirbelströmung bildet sich hierbei bevorzugt über die gesamte Spaltbreite aus.
Der Slalomkanal ist hierbei bevorzugt als kammer mit einer Anordnung von aufeinanderfolgenden S-Schlägen frei wählbarer Radien längs des Spaltes zwischen den zweinander ruhenden Bauteilen ausgeführt.
Als wesentlicher Vorteil gegenüber den bisher bekannten fluiddynamischen Verfahren ergibt sich ein verminderter Bedarf an zur Abdichtung des Spaltes erforderlichem Sekundärfluidmassenstrom. Dies ist darin begründet, daß die fluidmechanische Trennung der Primärfluidströmung von dem im tertiärfluidseitigen Spaltanteil befindlichen Tertiärfluid mittels einer vergleichsweise dünnen Wirbelschicht des Sekundärfluides erfolgt Sekundär- und Tertiärfluid können hierbei grundsätzlich dem gleichen Reservoir entstammen, wobei aber geeignete Druckverhältnisse in der Zuströmung zum Spalt zu berücksichtigen sind. Die gezielte Ausbildung der Wirbelströmung des Sekundärfluides führt zu einem mehrfachen Überströmen des Spaltes eines jeden Sekundärfluidpartikels und somit einer mehrfachen Dichtwirkung. Das Sekundärfluid der Wirbelströmung vermischt sich hierbei nur geringfügig mit dem Primärfluid oder dem Tertiärfluid.
Ein weiterer wesentlicher Vorteil der Wirbelströmung gegenüber den einfach gerichteten Dichtströmungen wurde in der Eigenstabilität des Wirbels gefunden. Auch bei geringen Druckunterschieden des Sekundärfluides zu dem Primärfluid prägt sich die Wirbelströmung stabil aus und stellt somit die Dichtwirkung sicher. Im Hinblick auf Eigenstabilität und Einfachheit der Strömungsführung zeigte es sich, daß es besonders vorteilhaft ist, das Sekundärfluid so zu führen, daß sich eine um einen Rotationsmittelpunkt oder eine Rotationsachse rotierende Wirbelströmung ausbildet Mittels einer geeigneten Anordnung der Zuführung des Sekundärfluides in den primärströmungsseitigen Spaltaustrittsbereich wird diese Rotation der Wirbelströmung durch die auf den Zuführstrom wirkenden Kräften der Primärströmung hervorgerufen.

Die Strömungsführung erfolgt in einer in dem Spalt in Längs- oder Umfangsrichtung des Spaltes angeordneten Kammer. Ist der Spalt am Umfang einer Bauteilanordnung oder einer rotationssymmetrischen Maschine, beispielsweise einer Gasturbine, angeordnet, so ist die Längsrichtung des Spaltes identisch mit der Umfangsrichtung der Bauteilanordnung oder der Maschine. Zweckmäßigerweise wird im folgenden nur noch auf die Längsrichtung des Spaltes verwiesen. Bedingt durch die Kammerseitenwände wird in der ersten Ausführung der Erfindung eine von der Primärströmung weitgehend unabhängige, in ihrer Lage definierte Wirbelbildung der Sekundärfluidströmung erzeugt. Die kammerbildenden Aussparungen in den Bauteilseitenwänden können hierbei in Bezug auf die spaltbildenden Bauteile symmetrisch oder unsymmetrisch ausgeführt sein. Die Strömungsführung einer rotierenden Wirbelströmung erfolgt vorzugsweise in einer Rotationskammer. Um Totwassergebiete in der Rotationskammer zu vermeiden, sollte die Kammerkontur den äußeren Strömungsvektoren der Wirbelströmung angepaßt, bevorzugt rund oder elliptisch, ausgeformt sein. Im Falle einer in Bezug auf die Bauteilseitenwände symmetrischen Ausformung der Rotationskammer ergeben sich somit in einer Querschnittsbetrachtung der spaltbildenden Bauteile je halbkreisförmige oder halbellipsenförmige Aussparungen in den an den Spalt angrenzenden Bauteilkonturen.
Die Kammer kann als Endloskammer zur Abdichtung eines Endlosspaltes am Umfang einer Bauteilanordnung, insbesondere bei rotationssymmetrischen Maschinen, oder als Kammer mit endlichen Abmessungen ausgebildet sein. Eine endlich bemessene Kammer in einem endlichen Spalt kann sich in Bezug auf die Spaltlänge auch über den Anfang oder das Ende des Spaltes hinaus erstrecken. Ebenso ist auch die Anordnung einer lokalen Kammer in einem endlichen Spalt oder in einem Endlosspalt möglich. Die lokale Kammer erstreckt sich hierbei nur über einen Teilbereich des Spaltes. Eine lokale Kammer in einem Endlosspalt kommt insbesondere dann zum Einsatz, wenn die Abdichtung nur lokal erfolgen soll oder auch eine lokale Verstärkung einer anderweitigen Vorrichtung oder eines anderweitigen Verfahrens zum Abdichten des Spaltes angestrebt ist. In einer Gasturbine ist die Verstärkung herkömmlicher Vorrichtungen zum Abdichten insbesondere in den Bauteilspalten zwischen der Brennkammer und dem ersten Turbinenleitrad mit einem lokal erhöhten statischen Druck der Primärströmung infolge des Aufstaus vor den Turbinenleitschaufeln sinnvoll. In den Bereichen lokal erhöhten statischen Druckes der Primärströmung sind hierzu bevorzugt lokale Kammern in dem Spalt angeordnet.

In einer weiteren Ausführungsform kann die Kammer in Unterkammern unterteilt werden. Diese Unterteilung der Kammer in Unterkammern erfolgt bevorzugt über eine Anordnung von Trennwänden. In Turbomaschinen werden diese Trennwände vorteilhaft radial angeordnet.

Für jede Unterkammer läßt sich somit die Intensität der Wirbelströmung beispielsweise durch eine Variation des der Unterkammer zugeführten Sekundärfluidmassenstroms variieren.

Um den Strömungsbereich ohne wandseitige Führung zu reduzieren, weisen in einer bevorzugten Ausführung der Kammer eine oder beide spaltbildenden Seitenwände je eine Leitlippe in der Kontur der jeweiligen Seitenwand auf. Entsprechend ihrer Funktion zur Strömungsführung ist es von Vorteil, diese Leitlippen im jeweiligen Wirbelaustrittsbereich der in Drehrichtung der erzeugten Wirbelströmung des Sekundärfluides betrachteten Kammer anzuordnen. Die Leitlippen kragen hierbei in den Spalt hinein. Die kammerinnenseitige Kontur der Leitlippe ist in Fortführung der kammerbildenden Seitenwandkontur in einer bevorzugten Ausführung den äußeren Strömungsvektoren der Wirbelströmung angepaßt ausgeführt.
Eine sich als Fehlströmung ausbildende Divergenz der Wirbelströmung in den nicht wandgeführten Bereichen der Kammer kann zusätzlich über mindestens eine Hinterschneidung in der Kammerkontur berücksichtigt werden. Diese Hinterschneidung der Kammerkontur ist bevorzugt dergestalt ausgeführt, daß die jeweils im Wirbeleintrittsbereich der in Drehrichtung des erzeugten Wirbels betrachteten Kontur der kammerbildenden Seitenwand einen größeren Abstand zum Mittelpunkt der Wirbelströmung aufweist als im Austrittsbereich der in Wirbeldrehrichtung vorangestellten kammerbildenden Seitenwand.
Durch eine besonders bevorzugte Kombination einer Leitlippe mit einer Hinterschneidung des in Wirbeldrehrichtung nachgeordneten Bauteils erfährt die Wirbelströmung bei Überströmen des Spaltes einen einer Sprungschanze ähnlichen Effekt.

Insbesondere bei langen Spalten oder Endlosspalten ist es zweckmäßig, zumindest einen Wirbelablenker in der Kammer anzuordnen. Dieser Wirbelablenker führt zu einem gezielten und örtlich definierten Zusammenbrechen der Wirbelströmung und einem Ausströmen des Fluides der Wirbelströmung aus der Kammer in die Primärströmung. Dies ist insbesondere deshalb zweckmäßig, um insbesondere auch das Fluid im Zentrum der Wirbelströmung zu erneuern.

Insgesamt ist es sinnvoll und zumeist ausreichend, wenn im Turbinenbereich einer Gasturbine Sekundärfluid Verwendung findet, das zuvor zur Bauteilkühlung in zumeist geschlossenen Kühlkanälen eingesetzt wurde.

Grundsätzlich wird bei jeder Anordnung der Wirbelströmung eine Interaktion des Sekundärfluides mit einerseits dem Primärfluid und andererseits, sofern vorhanden, mit dem Tertiärfluid stattfinden. Die auf die Fluidpartikel wirkenden viskosen Scherkräfte in den Übergangsbereichen der Fluidströmungen führen neben einem dissipativen Impulsverlust zu einem gegenseitigen Fluidaustausch. Diese Interaktion kann in Abhängigkeit der konstruktiven Anordnung der Kammer in dem Spalt als auch der primär- und tertiärströmungsseitigen, geometrischen Spaltöffnungen sowie der Anordnung der Zuführkanäle gezielt beeinflußt werden. Sinnvollerweise sind die abhängigen Parameter so zu wählen, daß das wirbelbildende Fluid sukzessive in die Primärströmung abgeführt wird. Gleichermaßen ist eine kontinuierliche Zuführung von neuem Sekundärfluid in die Wirbelströmung erforderlich. Neben der Zuführung von Sekundärfluid über die Zuführkanäle kann auch ein Ansaugen von Fluid aus dem tertiärfluidseitigen Reservoir in die Wirbelströmung erfolgen.

Zusätzlich zur Wirbelströmung können herkömmliche, mechanische Dichtelemente in dem Spalt angeordnet sein. So kann beispielsweise zur zusätzlichen, mechanischen Abdichtung eines Bauteilspaltes in einer Gasturbine ein in Nuten eingelegter Dichtstreifen angebracht sein. Die Anordnung dieser mechanischen Dichtelemente erfolgt vorzugsweise auf der der Primärfluidströmung abgewandten Seite der Wirbelströmung. Eine Zuführung des Sekundärfluides durch den Spalt selbst kann auch in Kombination mit einem Dichtstreifen erfolgen. In konstruktiv einfacher Weise können zu diesem Zweck in einer bevorzugten Ausführung in dem Dichtstreifen Durchlaßöffnungen vorgesehen werden. Diese Durchlaßöffnungen sind bevorzugt unter geeigneten Winkeln gegenüber der Spaltmittelebene angestellt, so daß das den Dichtstreifen durchströmende Sekundärfluid beim Eintritt in die Kammer bereits einen Vordrall aufweist. Sowohl die Anstellwinkel, die geometrischen Ausformungen als auch die Wiederholhäufigkeit der Durchlaßöffnungen sind vorteilhaft unter dem Gesichtspunkt der Aufrechterhaltung der Wirbelströmung zu wählen.

Ein weiterer Vorteil der rotierenden Wirbelströmung im Rahmen der Verwendung zur Abdichtung eines Spaltes insbesondere im Heißgasteil einer Gasturbine gegenüber bisherigen Vorrichtungen und Verfahren liegt in dem sich als Folge der Rotation einstellenden Temperaturprofil der Wirbelströmung. Bei homogener Fluidzusammensetzung der Wirbelströmung konzentrieren sich die heißen Fluidpartikel im Zentrum der Wirbelströmung, wohingegen kältere Fluidpartikel in die Außenbereiche der Wirbelströmung zentrifugiert werden. Aus diesem physikalischen Effekt ergeben sich im Vergleich zu bisherigen Vorrichtungen und Verfahren zum fluiddynamischen Abdichten des Spaltes unmittelbar zwei Vorteile der Wirbelströmung. Einerseits führt dieser Zentrifugen-Effekt durch die Anhäufung kälteren Fluides in den Außenbereichen des Wirbels mit einer Angrenzung der äußeren Geschwindigkeitsvektoren der Wirbelströmung an die spaltbildenden Bauteile zu einem Wärmeaustausch mit den angrenzenden Bauteilen. Im Heißgasteil einer Gasturbine führt dies in der Regel zu einer Kühlung der betroffenen Bauteile. Andererseits wird in den Spalt, zumeist an den Seitenwandungen des Spaltes, eindringendes und von der Wirbelströmung erfaßtes Fluid der heißen Primärströmung aus den Außenbereichen der Wirbelströmung in das Wirbelzentrum verdrängt. Die sich einstellende Temperatur an den Bauteilwänden entspricht somit maximal einer sich einstellenden Mischtemperatur entsprechend den Fluidanteilen der Wirbelströmung.
Kleine Abmessungen der Kammer oder des die Wirbelströmung einschließenden Spaltquerschnittes wirken sich positiv im Sinne der Wirbelintensität als auch des Wärmeübergangs aus. Die sich einstellenden, hohen Geschwindigkeiten der Wirbelströmung führen gleichzeitig aber auch zu einem hohen, dissipativen Druckverlust der Strömung. Dies wiederum erfordert eine Anordnung der Zuführkanäle in kurzen Abständen zueinander längs des Spaltes oder der Kammer zum Zwecke der Re-Energetisierung der Strömung.
Ein wesentlicher Vorteil der erfindungsgemäßen Strömungsführung des Sekundärfluides zum fluiddynamischen Abdichten eines Spaltes im Vergleich zu mechanischen Dichtungen stellt die Anpassungsfähigkeit der Wirbelströmung im Falle geometrischer Verschiebungen der spaltbildenden Bauteile zueinander dar. Diese Verschiebungen können als Folge mechanischer oder thermischer Bauteildehnungen im Betrieb einer Gasturbine auftreten. Kleine geometrische Abmessungen der Kammer schränken die absolute Anpassungsfähigkeit ein.

### Kurze Beschreibung der Zeichnungen

In den Zeichnungen sind Ausführungsbeispiele der Erfindung dargestellt.

Es zeigen:
- Fig. 1: eine Draufsicht auf einen ebenen Spalt in Anordnung mit einem Slalomkanal
- Fig. 2: einen Schnitt durch zwei spaltbildende Bauteile, die einen Slalomkanal in Kombination mit einer mechanischen Dichtung und Hinterschneidungen des Slalomkanals aufweisen
- Fig. 3: Seitenansicht einer Umlenktasche aus Figur 2.

### Wege zur Ausführung der Erfindung

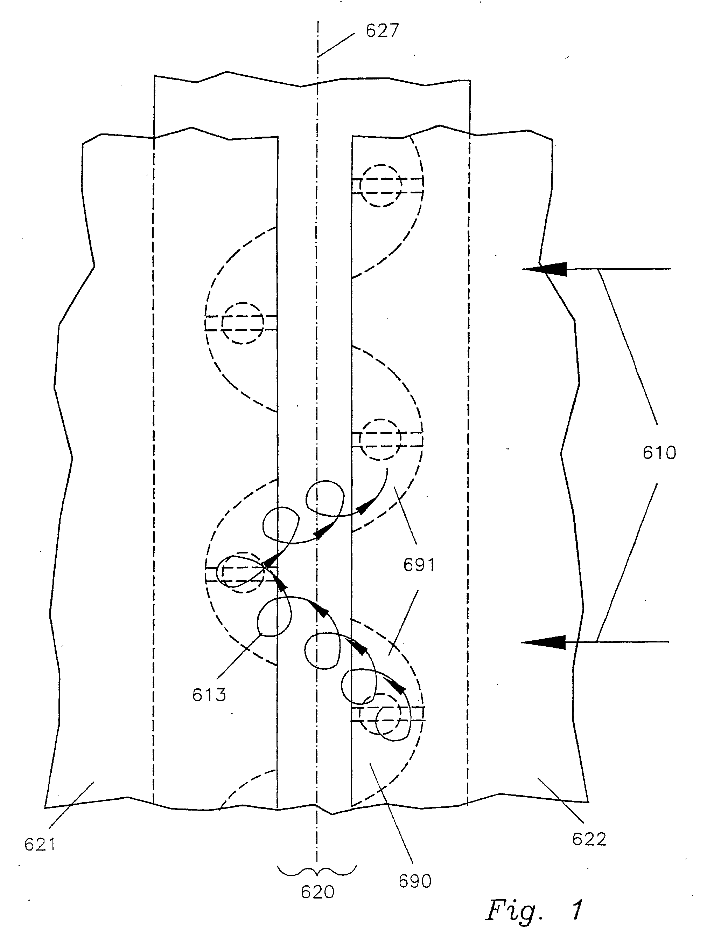

Figur 1 zeigt einen Schnitt durch zwei Bauteile 621 und 622 zwischen denen ein Spalt 620 verbleibt, in Anordnung mit einer erfindungsgemäßen Abdichtvorrichtung.

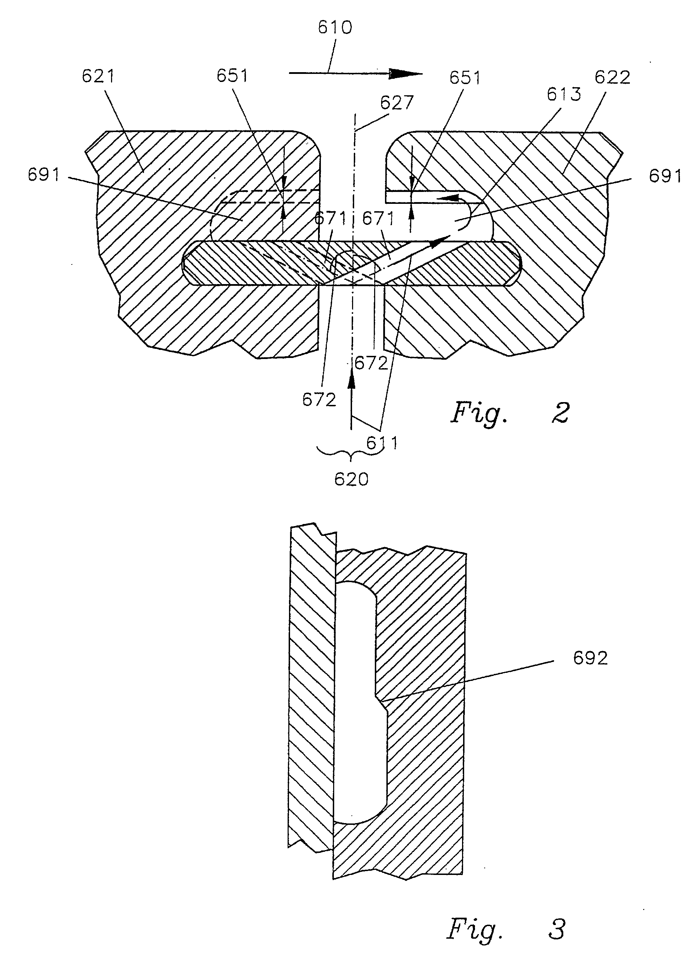

Die erfindungsgemäße Vorrichtung dient zur Abdichtung des Spaltes 620 gegenüber einem den Spalt überströmenden Primärfluid 610 . Die Strömungsführung erfolgt hier in einer als Slalomkanal 690 ausgebildeten Kammer, die in S-Schlägen längs des Spaltes 620 angeordnet ist. Das Sekundärfluid 611 wird dem Slalomkanal 690 über Durchlaßöffnungen 671 in dem in Nuten eingelegten Dichtstreifen 670, wie in Figur 2 dargestellt, zugeführt. Die Durchlaßöffnungen 671 sind in Abhängigkeit der jeweiligen Lage in Bezug auf den Slalomkanal 690 mit variierenden Winkeln 672 gegenüber der Spaltmittelebene 627 angestellt. Bevorzugt wird das Sekundärfluid 611 der Kammer in den Seitentaschen 691 zugeführt. Hier ergeben sich die geringsten unmittelbaren Massenstromverluste der Wirbelströmung 613 infolge direkten Ausströmens des zugeführten Sekundärfluides 611 aus dem Spalt 620 in die Primärströmung 610. Das primärströmungsseitige Überströmen des Spaltes 620 wird durch Hinterschneidungen 651 der Bauteile gefördert. Die infolge der Hinterschneidungen vergrößerten Strömungsquerschnitte des Slalomkanals 690 werden, wie in Figur 3 dargestellt, durch Querschnittsverengungen 692 in den Seitentaschen 691 des Slalomkanals 690 wieder reduziert. Diese Verengung kann auch in kontinuierlicher Weise erfolgen.
Die in dem Slalomkanal 690 geführte Wirbelströmung 613 überströmt, dem S-förmigen Kanalverlauf folgend, den Spalt 620 mehrfach. Diesem S-förmigen, dem Kanalverlauf folgenden Strömungsverlauf ist in Abhängigkeit insbesondere des Anstellwinkels 672 der Durchlaßöffnungen 671 und somit der Zuführung des Sekundärfluides 611 zur Slalomkammer 690 ein Wirbelsystem mit einem Wirbelvektor in Kanallängsrichtung überlagert.
Kleinere Radien der S-Schläge bedingen größere Druckverluste der Wirbelströmung 613. Gleichzeitig stellt sich aber auch eine homogenere Dicht- und Kühlwirkung infolge häufigeren Überströmens des Spaltes 620 ein.

Die als Slalomkanal 690 ausgebildete Kammer kann zusätzlich Wirbelablenker aufweisen. Diese Wirbelablenker dienen dazu, die Wirbelstruktur lokal zu stören und somit ein Ausfließen des Fluides der Wirbelströmung in die Primärströmung zu verursachen. Die Wirbelablenker konnen verschieden ausgeführt sein, beispielweise als eine lokal übertriebene Hinterschneidung oder als eine Querwand in der Kammer.

In einer Ausführungsform kann die als Slalomkanal 690 ausgebildete kammer auch zumindest eine in den Spalt 620 kragende Leitlippe aufweisen. Diese Leitlippe kann beispielsweise bis zu 70% der Breite des Spaltes 620 in den Spalt hineinragen und dient zur umleukung der Sekundär fluidströmung.

Die die Wirbelströmung führende Kammer kann längs der gesamten Lauflänge des Spaltes ausgebildet sein. Ein am Umfang einer Bauteilanordnung verlaufender Endlos-Spalt weist zur Abdichtung folglich auch eine Endlos-Kammer auf. Im Falle eines endlichen Spaltes kann sich die Kammer auch über die Erstreckung des Spaltes hinaus erstrecken. Ebenso kann eine Kammer aber auch als lokale Kammer in einem Spalt angeordnet sein. Die lokale Kammer erstreckt sich hierbei nur über einen Teilbereich oder einen Abschnitt des Spaltes.

Die Anordnung einer oder mehrerer lokaler Kammern in einem Spalt sind insbesondere dann sinnvoll, wenn entweder der Spalt nicht auf seiner gesamten Länge gegen das Primärfluid abzudichten ist, oder wenn das herkömmliche Dichtverfahren in Abschnitten des Spaltes lokal verstärkt werden soll. Dieser Fall tritt insbesondere im Turbineneintrittsbereich einer Gasturbine auf. Infolge des lokalen Aufstaus der Primärströmung in der Anströmung des Schaufelprofils der Eintrittsleitschaufeln, insbesondere im Staupunkt der Schaufel, mit einer Rückwirkung dieses Aufstaus auf die Zuströmung, bildet sich für jede Schaufelpassage ein näherungsweise sinusförmiger Verlauf des statischen Druckes in der Ebene des Bauteilspaltes zwischen Brennkammer und Turbine aus. Um keine externe Druckluftversorgung erforderlich zu machen, wird Kühl- und Dichtfluid in Gasturbinen üblicherweise dem Primärstrom im Verdichterbereich entnommen. Bei gleichzeitig nur geringem Druckverlust der Primärströmung in der Brennkammer weist das zum Zwecke fluiddynamischen Abdichtens des Bauteilspaltes zwischen Brennkammer und Turbine eingesetzte Dichtfluid oftmals einen nur geringfügig höheren Totaldruck im Vergleich zum mittleren statischen Druck der Primärströmung auf. Tritt infolge eines Aufstaus der Primärfluidströmung eine lokale Erhöhung des statischen Druckes der Primärfluidströmung auf, so kann es bei herkömmlichen Dichtverfahren in Teilbereichen des Spaltes zu einer nicht mehr ausreichenden Abdichtung des Spaltes infolge zu geringen Gegendruckes des Dichtfluides kommen. Insbesondere in diesem Anwendungsfall führt eine in einer lokalen Kammer ausgebildete Wirbelströmung zu einer auch im Falle kleiner Druckunterschiede funktionssicheren Abdichtung des Spaltes.

### Bezugszeichenliste

- 610: Primärfluid
- 611: Sekundärfluid
- 613: Wirbelströmung
- 620: Spalt
- 621: erstes spaltbildendes Bauteil
- 622: zweites spaltbildendes Bauteil
- 627: Spaltmittelebene oder Längsachse des Spaltes
- 651: Hinterschneidung der Bauteilkonturen
- 670: Dichtstreifen
- 671: Durchlaßöffnung in dem Dichtstreifen
- 672: Anstellwinkel der Durchlaßöffnung gegenüber der Spaltmittelebene
- 690: Slalomkanal
- 691: Seitentasche des Slalomkanals
- 692: Querschnittsverengung des Slalomkanals

## Patentansprüche

1. Vorrichtung zum Abdichten eines Spaltes (620) mittels eines Sekundärfluides (611) gegen ein Primärfluid (610), wobei der Spalt (620) zwischen einem ersten Bauteil (621) und einem zweiten Bauteil (622) angeordnet ist, und das erste Bauteil (621) und das zweite Bauteil (622) zueinander ruhen,
**dadurch gekennzeichnet, daß**
in dem Spalt (620) in Längsrichtung des Spaltes (620) eine als Slalomkanal (690) ausgebildete Kammer angeordnet ist.

2. Vorrichtung nach Anspruch 1,
**dadurch gekennzeichnet, daß**
die Kammer zumindest eine in den Spalt (620) kragende Leitlippe aufweist.

3. Vorrichtung nach einem der vorstehenden Ansprüche,
**dadurch gekennzeichnet, daß**
die Kammer zumindest eine Hinterschneidung (651) aufweist.

4. Vorrichtung nach einem der vorstehenden Ansprüche,
**dadurch gekennzeichnet, daß**
die Kammer als Endlos-Kammer am Umfang einer Bauteilanordnung ausgeführt ist

5. Vorrichtung nach einem der Ansprüche 1 bis 3,
**dadurch gekennzeichnet, daß**
die Kammer als lokale Kammer ausgeführt ist.

6. Vorrichtung nach einem der vorstehenden Ansprüche,
**dadurch gekennzeichnet, daß**
die Kammer durch Trennwände in Unterkammern unterteilt ist.

7. Vorrichtung nach einem der vorstehenden Ansprüche,
**dadurch gekennzeichnet, daß**
der Spalt mittels eines Dichtstreifens (670) mechanisch abgedichtet ist.

8. Vorrichtung nach einem der vorstehenden Ansprüche,
**dadurch gekennzeichnet, daß**
der Dichtstreifen Durchlaßöffnungen (671) aufweist, die gegenüber der Spaltmittelebene (627) angestellt sind.

9. Vorrichtung nach einem der vorstehenden Ansprüche,
**dadurch gekennzeichnet, daß**
die Kammer zumindest einen Wirbelablenker aufweist.

## Claims

1. Arrangement for sealing a gap (620) against a primary fluid (610) by means of a secondary fluid (611), the gap (620) being arranged between a first component (621) and a second component (622), and the first component (621) and the second component (622) being stationary relative to one another, **characterized in that** a chamber which is designed as a slalom conduit (690) is arranged in the gap (620) in the longitudinal direction of the gap (620).

2. Arrangement according to claim 1, **characterized in that** the chamber has at least one guiding lip jutting out into the gap (620).

3. Arrangement according to one of the preceding claims, **characterized in that** the chamber has at least one undercut (651).

4. Arrangement according to one of the preceding claims, **characterized in that** the chamber is designed as an endless chamber at the periphery of a component configuration.

5. Arrangement according to one of Claims 1 to 3, **characterized in that** the chamber is designed as a local chamber.

6. Arrangement according to one of the preceding claims, **characterized in that** the chamber is subdivided into subchambers by dividing walls.

7. Arrangement according to one of the preceding claims, **characterized in that** the gap is mechanically sealed by means of a seal strip (670).

8. Arrangement according to one of the preceding claims, **characterized in that** the seal strip has openings (671), which are set at an angle of incidence relative to the gap centre plane (627).

9. Arrangement according to one of the preceding claims, **characterized in that** the chamber has at least one vortex diffuser.

## Revendications

1. Dispositif pour réaliser l'étanchéité d'une fente (620) au moyen d'un fluide secondaire (611) par rapport à un fluide primaire (610), la fente (620) étant prévue entre un premier composant (621) et un deuxième composant (622), et le premier composant (621) et le deuxième composant (622) étant en contact l'un avec l'autre,
**caractérisé en ce que**
une chambre réalisée sous la forme d'un conduit ondulé (690) est prévue dans la fente (620) dans la direction longitudinale de la fente (620).

2. Dispositif selon la revendication 1,
**caractérisé en ce que**
la chambre présente au moins une lèvre de guidage faisant saillie dans la fente (620).

3. Dispositif selon l'une quelconque des revendications précédentes,
**caractérisé en ce que**
la chambre présente au moins une contre-dépouille (651).

4. Dispositif selon l'une quelconque des revendications précédentes,
**caractérisé en ce que**
la chambre est réalisée en tant que chambre sans fin sur la périphérie d'un agencement de composant.

5. Dispositif selon l'une quelconque des revendications 1 à 3,
**caractérisé en ce que**
la chambre est réalisée sous la forme d'une chambre locale.

6. Dispositif selon l'une quelconque des revendications précédentes,
**caractérisé en ce que**
la chambre est divisée par des parois de séparation en chambres secondaires.

7. Dispositif selon l'une quelconque des revendications précédentes,
**caractérisé en ce que**
la fente est rendue étanche par des moyens mécaniques au moyen d'une bande d'étanchéité (670).

8. Dispositif selon l'une quelconque des revendications précédentes,
**caractérisé en ce que**
la bande d'étanchéité présente des ouvertures de passage (671) qui sont prévues en face du plan médian de la fente (627).

9. Dispositif selon l'une quelconque des revendications précédentes,
**caractérisé en ce que**
la chambre présente au moins un déflecteur de tourbillons.
